**Europäisches Patentamt**

(19) **European Patent Office**

**Office européen des brevets**

(11) Veröffentlichungsnummer: **0 140 016**
**B1**

(12) # EUROPÄISCHE PATENTSCHRIFT

(45) Veröffentlichungstag der Patentschrift:
08.04.87

(51) Int. Cl.⁴: **F 16 H 55/17,** B 02 C 17/24,
F 27 B 7/26

(21) Anmeldenummer: **84110282.5**

(22) Anmeldetag: **29.08.84**

(54) Zahnkranz.

(30) Priorität: **05.10.83 DE 8328742 U**

(43) Veröffentlichungstag der Anmeldung:
**08.05.85 Patentblatt 85/19**

(45) Bekanntmachung des Hinweises auf die Patenterteilung:
**08.04.87 Patentblatt 87/15**

(84) Benannte Vertragsstaaten:
**DE FR GB IT**

(56) Entgegenhaltungen:
**DE-A-1 400 263**
**DE-A-2 518 114**
**DE-C-1 101 261**
**US-A-3 561 741**

(73) Patentinhaber: **Krupp Polysius AG, Graf- Galen-Strasse 17, D-4720 Beckum (DE)**

(72) Erfinder: **Henne, Heinrich, Dipl.- Ing., Freesland 22, D-4722 Ennigerloh (DE)**
Erfinder: **Grothaus, Hubert, Kronesch 11, D-4505 Iburg (DE)**
Erfinder: **Beyer, Eberhard, Dipl.- Ing., Wagnerstrasse 6, D-4740 Oelde (DE)**
Erfinder: **Kästingschäfer, Gerhard, Dipl.- Ing., Kopernikusstrasse 10, D-4415 Sendenhorst (DE)**

(74) Vertreter: **Tetzner, Volkmar, Dr.- Ing. Dr. Jur., Van- Gogh- Strasse 3, D-8000 München 71 (DE)**

EP 0 140 016 B1

LIBER, STOCKHOLM 1987

## Beschreibung

Die Erfindung betrifft einen Zahnkranz der im Oberbegriff des Anspruches 1 genannten Art, insbesondere für Rohrmühlen oder andere Drehtrommeln.

Es sind Zahnkränze bekannt, deren zwischen Zahnkranzbandage und innerem Befestigungsflansch vorgesehene Stege eine Anzahl von gleichmäßig verteilten kreisförmigen Öffnungen enthalten (DE-A- 2 518 114, DE-A- 1 400 263). Diese kreisförmigen Öffnungen sind dabei verhältnismäßig weit voneinander entfernt; so beträgt das Verhältnis zwischen der Weite (b) der Öffnungen in Umfangsrichtung und der zwischen benachbarten Öffnungen vorhandenen Stegbreite (c) im Falle der DE-A- 2 518 114 etwa 1/1,23 und im Falle der DE-A- 1 400 263 etwa 1/1,78.

Aus der Praxis sind ferner Zahnkränze der im Oberbegriff des Anspruches 1 vorausgesetzten Art bekannt, bei denen zur möglichst weitgehenden Gewichtsverringerung die Öffnungen in den Stegen verhältnismäßig groß, etwa viereckig ausgebildet sind. Dabei liegt das Verhältnis zwischen der radialen Höhe der Öffnungen und der Weite der Öffnungen in Umfangsrichtung bisher zwischen 1/1,8 und 1/3,3. Das Verhältnis zwischen der Weite der Öffnungen in Umfangsrichtung und der zwischen benachbarten Öffnungen vorhandenen Stegbreite beträgt bisher zwischen 1/1,7 und 1/2,5.

Um trotz dieser verhältnismäßig großen Öffnungen die notwendige Quersteifigkeit zu erzielen, sind bei den bekannten Zahnkränzen zwischen den Stegen radial angeordnete Rippen vorgesehen.

Bedingt durch diese Konstruktion treten bei den bekannten Zahnkränzen verschiedene Probleme auf:

- An den Anschlußstellen der Rippen an die äußere Zahnkranzbandage zeigen sich gelegentlich Risse und Lunker;
- an den großen Öffnungen in den Stegen treten beim Abkühlen nach dem Gießen gelegentlich Risse auf;
- weitere Risse entstehen - häufig nach einer längeren Betriebszeit - an dem Anschluß der Verbindungsflansche der Zahnkranzhälften zur Zahnkranzbandage und zum inneren Befestigungsflansch;
- aufgrund der Rippen ergeben sich ferner unterschiedliche elastische Deformationen der Zahnkranzbandage unter Last, was zu einem wechselnden Tragbild der Verzahnung und häufig zu Anrissen im Zahnfuß führt.

Der Erfindung liegt daher die Aufgabe zugrunde, einen Zahnkranz der im Oberbegriff des Anspruches 1 genannten Art unter Vermeidung der geschilderten Mängel so auszubilden, daß trotz materialsparender Bauweise ein qualitativ hochwertiges Produkt, insbesondere ohne Risse und Lunker, erzielt wird.

Diese Aufgabe wird erfindungsgemäß durch die kennzeichnenden Merkmale des Anspruches 1 gelöst.

Erfindungsgemäß sind die in den Stegen vorgesehenen Öffnungen somit wesentlich kleiner als bisher und besitzen auch ein gleichmäßigeres Seitenverhältnis (die Öffnungen können vorzugsweise rund, ellipsenförmig oder als Trapez mit abgerundeten Ecken ausgebildet sein). Der zwischen den beiden Stegen befindliche Raum wird efindungsgemäß zweckmäßig rippenfrei gestaltet.

Eine solche Ausführung vermeidet die eingangs geschilderten Probleme des Auftretens von Rissen und Lunkern an verschiedenen Anschlußstellen. Die erfindungsgemäße Lösung führt außerdem zu einem gleichmäßigen Tragbild der Verzahnung und damit zu einem verringerten Verschleiß der Zähne.

Üblicherweise werden große Zahnkränze aus zwei Zahnkranzhälften zusammengesetzt,wobei an den Anschlußstellen der Verbindungsflansche zur Zahnkranzbandage und zum inneren Befestigungsflansch bei den bekannten Ausführungen vielfach Risse auftreten.

Erfindungsgemäß wird bei einem Zahnkranz der genannten, im Oberbegriff des Anspruches 4 vorausgesetzten Art dieser Nachteil durch das kennzeichnende Merkmal des Anspruches 4 vermieden.

Zweckmäßige Ausgestaltungen dieses Zahnkranzes sind Gegenstand der Unteransprüche 5 bis 8.

Ein Ausführungsbeispiel der Erfindung ist in der Zeichnung veranschaulicht. Es zeigen

Fig. 1 eine Ansicht eines erfindungsgemäßen Zahnkranzes;

Fig. 2 eine Teildarstellung in vergrößertem Maßstab;

Fig. 3 einen Teilschnitt längs der Linie III-III der Fig. 1 (in vergrößertem Maßstab);

Fig. 4 eine Teilansicht der Fig. 1 (in vergrößertem Maßstab);

Fig. 5 eine Ansicht in Richtung des Pfeiles V der Fig. 4;

Fig. 6 einen Schnitt längs der Linie VI-VI der Fig. 1.

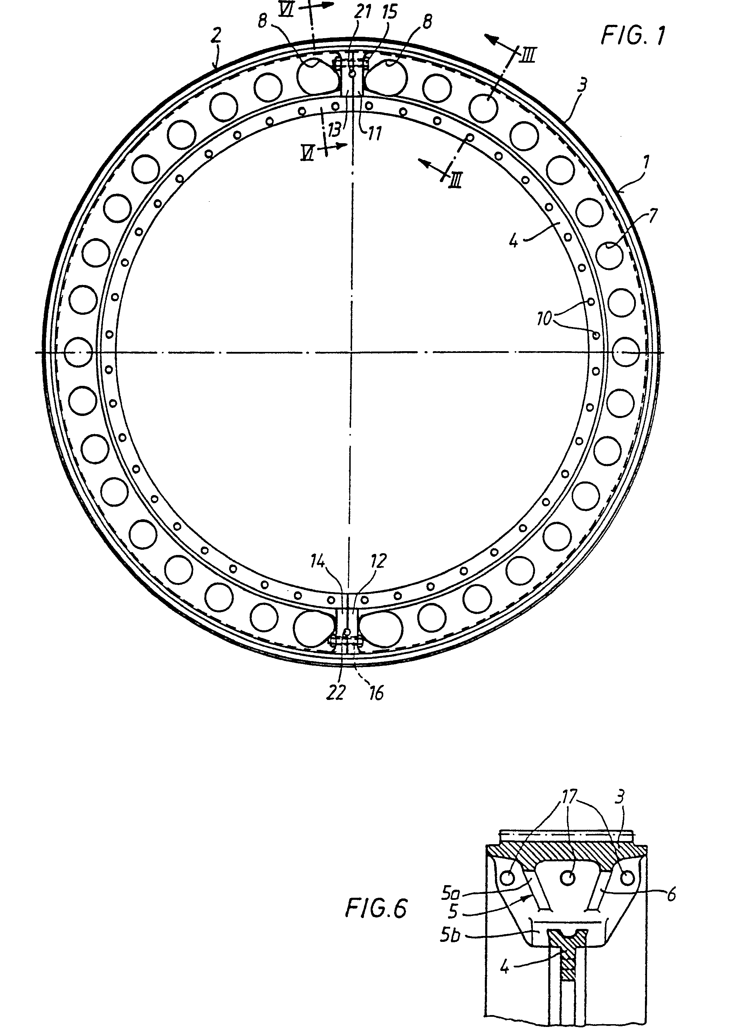

Der in der Zeichnung dargestellte Zahnkranz besteht aus zwei Zahnkranzhälften 1 und 2, die längs einer in Fig. 1 vertikal verlaufenden mittleren Teilungslinie zusammengesetzt sind.

Jede dieser Zahnkranzhälften besitzt eine äußere Zahnkranzbandage 3, einen inneren Befestigungsflansch 4 und zwei zwischen Zahnkranzbandage 3 und Befestigungsflansch 4 angeordnete, V-förmig angeordnete Stege 5,6 mit gleichmäßig verteilten Öffnungen 7.

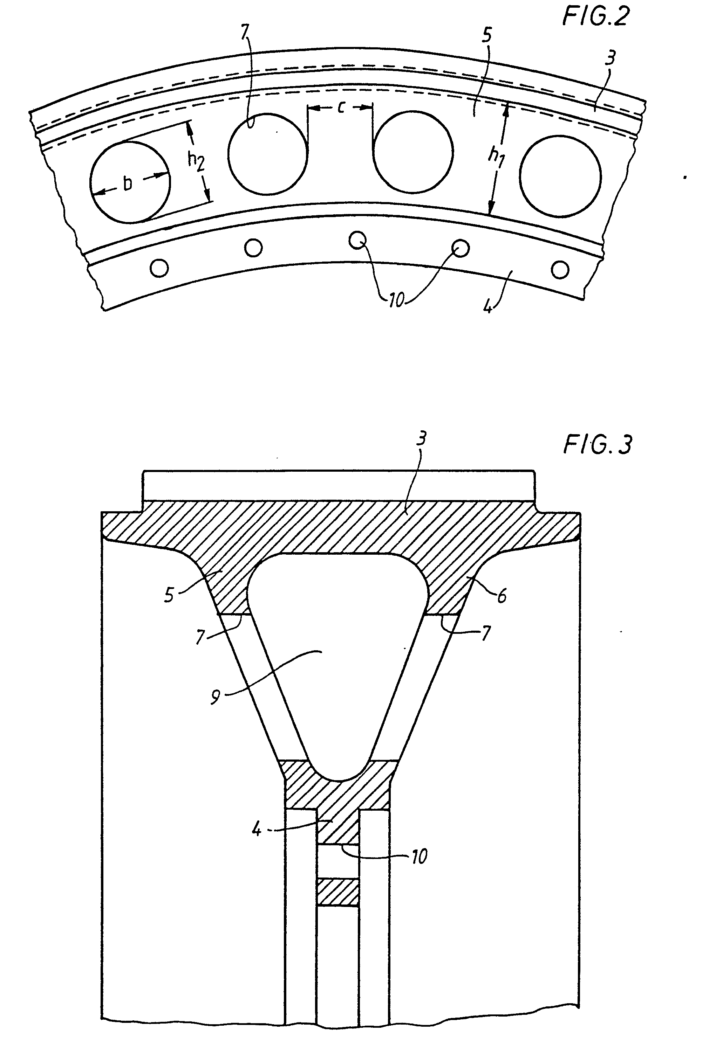

Diese Öffnungen 7 sind vorzugsweise kreisförmig ausgebildet (sie können jedoch auch ellipsenförmig oder als Trapez mit abgerundeten Ecken ausgeführt werden), wobei Fig.2 die für die Erfindung wesentliche Dimensionierung als ein mögliches Beispiels erkennen läßt:

Bezeichnet man die Weite der Öffnungen 7 in Umfangsrichtung mit b, die radiale Höhe der Öffnungen mit $h_2$, die radiale Höhe der Stege 5

bzw. 6 mit $h_1$ und die Stegbreite zwischen benachbarten Öffnungen mit c, so liegt erfindungsgemäß das Verhältnis $h_2/b$ zwischen 1/1 und 1/1,5 und das Verhältnis b/c zwischen 1/0,7 und 1/1. Weiterhin liegt das Verhältnis $h_1/h_2$ zwischen 1,35 und 1,6.

Die Öffnungen 8 können dabei vorzugsweise rund, ellipsenförmig oder als Trapez mit abgerundeten Ecken ausgebildet sein. Auch sonstige Zwischen- und Sonderformen sind möglich.

Wie Fig. 3 erkennen läßt, ist der zwischen den beiden Stegen 5, 6 befindliche Raum 9 rippenfrei ausgebildet.

Die in dem inneren Befestigungsflasch 4 vorgesehen Öffnungen 10 dienen zur Befestigung des Zahnkranzes am Zylinder einer Rohrmühle bzw. sonstigen Drehtrommel.

Die beiden Zahnkranzhälften 1 und 2 sind an ihren Enden mit Verbindungsflanschen 11, 12 bzw. 13, 14 versehen, die zur Aufnahme von Verbindungsschrauben 15 bzw. 16 bestimmt sind.

Wie Fig. 6 erkennen läßt, sind die beiden aneinandergrenzenden Verbindungsflansche durch eine einzige Reihe von mindestens zwei Schrauben (Schraubenlöcher 17) miteinander verbunden, die direkt unter der Zahnkranzbandage 3 angeordnet sind.

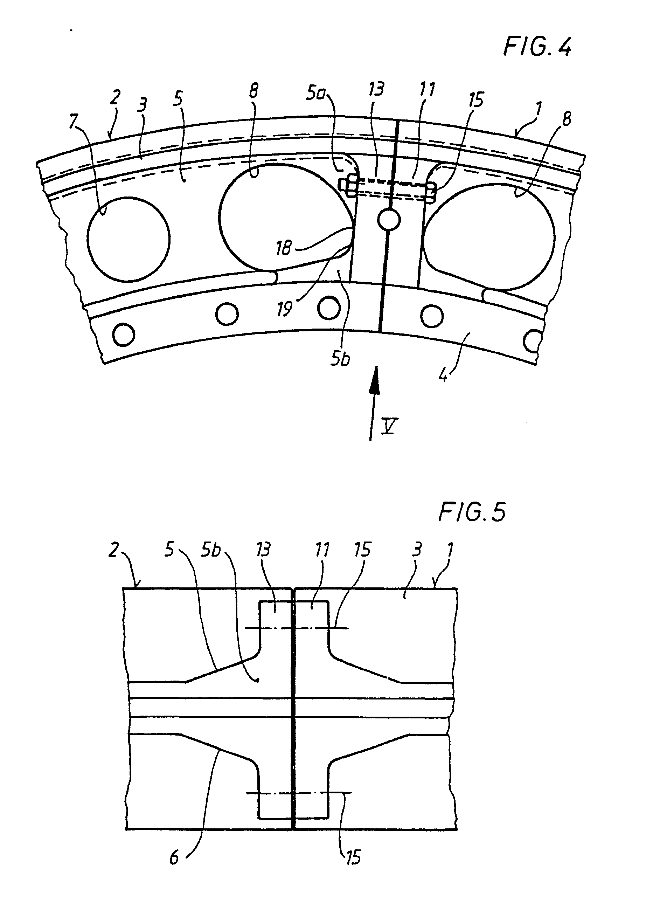

An die Verbindungsflansche 11 bis 14 grenzt je eine Öffnung 8 der Stege 5 bzw. 6 unmittelbar an. Diese Öffnungen 8 können größer und anders als die übrigen Öffnungen 7 geformt sein. Sie besitzen vorzugsweise birnenförmige Gestalt. Die Fig. 4, 5 und 6 veranschaulichen im einzelnen die Anbindung der Stege 5, 6 an die Verbindungsflansche 11 bis 14.

Die Anbindung des äußeren Bereiches (z.B. 5a) der Stege (z.B. 5) an die Verbindungsflansche (z.B. 13) ist in radialer Richtung so weit nach innen gezogen, daß die Verbindungsschrauben 15 zwischen dieser Anbindungsstelle 18 und der Innenseite der Zahnkranzbandage 3 liegen (vgl. Fig. 4).

Auf der anderen Seite ist die Anbindung des inneren Bereiches (z.B. 5b) der Stege (z.B. 5) an die Verbindungsflansche (z.B. 13) in radialer Richtung gegenüber dem Fußpunkt der Stege etwas nach außen gezogen, so daß der zur Anbindungsstelle 19 verlaufende innere Bereich 5b der Stege in radialer Richtung etwas ansteigt (vgl. Fig. 4). Zugleich verbreitert sich der zur Anbindungsstelle 19 verlaufende innere Bereich 5b der Stege etwas in axialer Richtung, wie Fig. 5 erkennen läßt.

Es ist wichtig, daß die beiden Zahnkranzhälften 1 und 2 im Bereich der Verbindungsflansche 11 bis 14 gut aneinander anliegen. Die Montage wird hierbei mittels zweier Zentrierbolzen erleichtert, für die in den Verbindungsflanschen Querbohrungen 21, 22 vorgesehen sind.

Die Verbindungsschrauben 15, 16 haben einerseits die Kräfte aufzunehmen, die aus der Verzahnung während des Betriebes resultieren, und werden andererseits durch eine unterschiedliche Erwärmung des inneren Befestigungsflansches 4 im Vergleich zur äußeren Zahnkranzbandage 3 beansprucht. Indem bei der erfindungsgemäßen Ausführung die Anbindung des äußeren Bereiches (z.B. 5a) der Stege (z.B. 5) an die Verbindungsflansche in radialer Richtung nach innen gezogen ist, liegen die Verbindungsschrauben 15 bzw. 16 ausschließlich zwischen dieser Anbindungsstelle 18 und der Innenseite der Zahnkranzbandage 3, wodurch sich eine günstigere mechanische und thermische Beanspruchung dieser Schrauben ergibt.

Die birnenförmige Gestalt der Öffnungen 8 ergibt einerseits optimale Festigkeitsverhältnisse im Bereich der Anbindung der Stege 5, 6 an die Verbindungsflansche und gewährleistet andererseits den notwendigen Freiraum zur Montage und Demontage der Verbindungsschrauben 15, 16.

**Patentansprüche**

1. Zahnkranz, insbesondere für Rohrmühlen und andere Drehtrommeln, enthaltend
    a) eine äußere Zahnkranzbandage (3),
    b) einen inneren Befestigungsflansch (4),
    c) zwei zwischen Zahnkranzbandage (3) und Befestigungsflansch (4) angeordnete, V-förmig angeordnete Stege (5, 6) mit gleichmäßig verteilten Öffnungen (7),
    d) wobei das Verhältnis zwischen der radialen Höhe ($h_1$) der Stege (5, 6) und der radialen Höhe ($h_2$) der Öffnungen (7) zwischen 1,35 und 1,6 liegt, gekennzeichnet durch folgende Merkmale:
    e) das Verhältnis zwischen der radialen Höhe ($h_2$) und der Weite (b) der Öffnungen (7) in Umfangsrichtung liegt zwischen 1/1 und 1/1,5;
    f) das Verhältnis zwischen der Weite (b) der Öffnungen (7) in Umfangsrichtung und der zwischen benachbarten Öffnungen vorhandenen Stegbreite (c) liegt zwischen 1/0,7 und 1/1.

2. Zahnkranz nach Anspruch 1, dadurch gekennzeichnet daß der zwischen den beiden Stegen (5, 6) befindliche Raum (9) rippenfrei ausgebildet ist.

3. Zahnkranz nach Anspruch 1, dadurch gekennzeichnet, daß die Öffnungen (7) rund, ellipsenförmig oder als Trapez mit abgerundeten Ecken ausgebildet sind.

4. Zahnkranz, insbesondere für Rohrmühlen, bestehend aus zwei Zahnkranzhälften (1, 2) enthaltend
    a) eine äußere Zahnkranzbandage (3),
    b) einen inneren Befestigungsflansch (4),
    c) zwei zwischen Zahnkranzbandage (3) und Befestigungsflansch (4) angeordnete, V-förmig angeordnete, mit Öffnungen (7, 8) versehene Stege (5, 6),
    d) zur Aufnahme von Verbindungsschrauben (15, 16) bestimmte Verbindungsflansche (11 bis 14) an den Enden der beiden Zahnkranzhälften (1, 2),
    e) wobei an die Verbindungsflansche (11 bis 14) je eine der in den Stegen (5, 6) vorgesehen Öffnungen (8) unmittelbar angrenzt, gekennzeichnet durch folgendes Merkmal:

f) Die Anbindung des äußeren Bereiches (z.B. 5a) der Stege (z.B. 5) an die Verbindungsflansche (11 bis 14) ist in radialer Richtung so weit nach innen gezogen, daß die Verbindungsschrauben (15, 16) zwischen dieser Anbindungsstelle (18) und der Innenseite der Zahnkranzbandage (3) liegen.

5. Zahnkranz nach Anspruch 4, dadurch gekennzeichnet, daß die Anbindung des inneren Bereiches (z.B. 5b) der Stege (z.B. 5) an die Verbindungsflansche (11 bis 14) in radialer Richtung gegenüber dem Fußpunkt der Stege (5, 6) etwas nach außen gezogen ist, so daß der zur Anbindungsstelle (19) verlaufende innere Bereich (z.B. 5b) der Stege (z.B. 5) in radialer Richtung langsam ansteigt.

6. Zahnkranz nach Anspruch 5, dadurch gekennzeichnet, daß sich der zur Anbindungsstelle (19) verlaufende innere Bereich (z.B.5b) der Stege (z.B. 5) zugleich in axialer Richtung verbreitert.

7. Zahnkranz nach Anspruch 4, dadurch gekennzeichnet, daß die an die Verbindungsflansche (z.B. 11 bis 14) angrenzenden Öffnungen (8) anders geformt als die übrigen Öffnungen (7) in den Stegen sind und eine vorzugweise birnenförmige Gestalt aufweisen.

8. Zahnkranz nach Anspruch 4, dadurch gekennzeichnet, daß die Verbindungsflansche (11, 13 und 12, 14) durch eine einzige Reihe von direkt unter der Zahnkranzbandage (3) angeordneten Schrauben (15 bzw. 16) miteinander verbunden sind.

## Claims

1. Toothed rim, especially for tube mills and other rotary drums, containing
   a) an outer band (3) of the toothed rim,
   b) an inner mounting flange (4),
   c) two webs (5, 6) which are arranged in V-formation between the band (3) of the toothed rim and the mounting flange (4) and have evenly distributed holes (7),
   d) in which the ratio between the radial height ($h_1$) of the webs (5, 6) and the radial height ($h_2$) of the holes (7) is between 1.355 and 1.6,
   characterised by the following features:
   e) the ratio between the radial height ($h_2$) and the width (b) of the holes (7) in the peripheral direction is between 1/1 and 1/1,5;
   f) the ratio between the width (b) of the holes (7) in the peripheral direction and the web breadth (c) between adjacent holes is between 1/0.7 and 1/1.

2. Toothed rim as claimed in claim 1, characterised in that the space (9) located between the two webs (5, 6) is of rib-free construction.

3. Toothed rim as claimed in claim 1, characterised in that the holes (7) are round, elliptical or are constructed as a trapezium with rounded corners.

4. Toothed rim, especially for tube mills, consisting of two toothed ring halves (1, 2) containing
   a) an outer band (3) of the toothed rim,
   b) an inner mounting flange (4),
   c) two webs (5, 6) which are arranged in V-formation between the outer band (3) of the toothed rim and the mounting flange (4) and have evenly distributed holes (7),
   d) connecting flanges (11 to 14) on the ends of two halves (1, 2) of the toothed rim intended to receive connecting screws (15, 16),
   e) in which one of the holes (8) in each case provided in the webs (5, 6) immediately adjoins the connecting flanges (11 to 14),
   characterised by the following feature:
   f) the fastening of the outer region (e.g. 5a) of the webs (e.g. 5) onto the connecting flanges (11 to 14) is drawn in the radial direction to such an extent that the connecting screws (15, 16) lie between this fastening point (18) and the inner surface of the outer band (3) of the toothed rim.

5. Toothed rim as claimed in claim 4, characterised in that the fastening of the inner region (e.g. 5b) of the webs (e.g. 5) onto the connecting flanges (11 to 14) is drawn out somewhat in the radial direction relative to the foot of the webs (5, 6) so that the inner region (e.g. 5b) of the webs (e.g. 5) extending to the fastening point (19) advances slowly in the radial direction.

6. Toothed rim as claimed in claim 5, characterised in that the inner region (e.g. 5b) of the webs (e.g. 5) extending to the fastening point (19) widens at the same time in the axial direction.

7. Toothed rim as claimed in claim 4, characterised in that the holes (8) adjoining the connecting flanges (e.g. 11 to 14) are of a different shape than the other holes (7) in the webs and are preferably pear-shaped.

8. Toothed rim as claimed in claim 4, characterised in that the connecting flanges (11, 13 and 12, 14) are connected to each other by a single row of screws (15 and 16 respectively) which are arranged directly below the outer band (3) of the toothed rim.

## Revendications

1. Couronne dentée, en particulier pour tubes broyeurs et autres tambours rotatifs, comprenant:
   a) un bandage extérieur denté (3),
   b) une collerette intérieure de fixation (4),
   c) deux parois d'entretoisement (5, 6) disposées en V entre le bandage denté (3) et la collerette de fixation (4) et comportant des ouvertures (7) réparties uniformément,

d) le rapport entre la hauteur radiale ($h_1$) des parois d'entretoisement (5, 6) et la hauteur radiale ($h_2$) des ouvertures (7) étant compris entre 1,35 et 1,6, caractérisée par les particularités suivantes:

e) le rapport entre la hauteur radiale ($h_2$) et la largeur (b) des ouvertures (7) dans la direction de la circonférence est compris entre 1/1 et 1/1,5;

f) le rapport entre la largeur (b) des ouvertures (7) dans la direction de la circonférence et la largeur (c) des éléments de parois situés entre les ouvertures voisines est compris entre 1/0,7 et 1/1.

2. Couronne dentée selon la revendication 1, caractérisée en ce que l'espace (9) situé entre les deux parois d'entretoisement (5, 6) ne comporte aucune nervure.

3. Couronne dentée selon la revendication 1, caractérisée en ce que les ouvertures (7) sont rondes, elliptiques ou trapézoïdales à angles arrondis.

4. Couronne dentée, en particulier pour tubes broyeurs, se composant de deux demi-couronnes (1, 2) et comprenant:

a) un bandage extérieur denté (3),

b) une collerette intérieure de fixation (4),

c) deux parois d'entretoisement (5, 6) disposées en V entre le bandage denté (3) et la collerette de fixation (4) et comportant des ouvertures (7, 8),

d) des brides de fixation (11 à 14) situées aux extrémités des deux demi-couronnes (1, 2) et destinées à loger des boulons d'assemblage (15, 16),

e) des ouvertures (8) de chacune des parois d'entretoisement (5, 6) avoisinant directement les brides d'assemblage (11 à 14),

caractérisée par les particularités suivantes:

f) le rattachement de la partie extérieure (par exemple 5a) des parois d'entretoisement (par exemple 5) aux brides d'assemblage (11 à 14) présente en direction radiale un profil suffisamment rentré pour que les boulons d'assemblage (15, 16) puissent être situés entre ce lieu de rattachement (18) et le côté intérieur du bandage denté (3).

5. Couronne dentée selon la revendication 4, caractérisée en ce que le rattachement de la partie intérieure (par exemple 5b) des parois d'entretoisement (par exemple 5) aux brides d'assemblage (11 à 14) présente un profil légèrement saillant en direction radiale par rapport au pied des parois d'entretoisement (5, 6), de sorte que la partie intérieure (par exemple 5b) des parois d'entretoisement (par exemple 5) qui longe le lieu correspondant de rattachement (19) est en pente légèrement ascendante en direction radiale.

6. Couronne dentée selon la revendication 5, caractérisée en ce que la partie intérieure (par exemple 5b) des parois d'entretoisement (par exemple 5) qui longe le lieu de rattachement (19) est aussi élargie en direction axiale.

7. Couronne dentée selon la revendication 4, caractérisée en ce que les ouvertures (8) qui avoisinent les brides d'assemblage (par exemple 11 à 14) ont une forme différente de celle des autres ouvertures (7) des parois d'entretoisement et présentent de préférence une forme en poire.

8. Couronne dentée selon la revendication 4, caractérisée en ce que les brides d'assemblage (11, 13 ainsi que 12, 14) sont fixées l'une à l'autre par une unique rangée de boulons (15 et 16) disposés directement sous le bandage denté (3).

FIG. 1

FIG.6

0 140 016

FIG.2

FIG.3

FIG. 4

FIG. 5